# EUROPÄISCHE PATENTSCHRIFT

(11) **EP 0 468 297 B1**
(45) Veröffentlichungstag und Bekanntmachung des Hinweises auf die Patenterteilung: **25.01.1995**
(21) Anmeldenummer: 91111581.4
(22) Anmeldetag: 11.07.1991
(51) Int. Cl.: A61C 1/06, A61C 1/18

(54) **Elektrische Leitungs- und Kontaktanordnung in zahnärztlichen Geräten**
Electrical conduits and connection arrangement for dental handpieces
Conduits électriques et contacts d'amenée de courant aux pièces à main dentaires

(30) Priorität: 24.07.1990 DE 9010968 U
(43) Veröffentlichungstag der Anmeldung: 29.01.1992
(73) Patentinhaber: SIEMENS AKTIENGESELLSCHAFT, 80333 München (DE)
(72) Erfinder: Bierbaum, Thomas, Dipl.-Ing., W-6143 Lorsch (DE)

(56) Entgegenhaltungen:
- DE-A- 3 339 650
- DE-B- 1 250 053
- US-A- 3 860 312

## Beschreibung

Die Erfindung betrifft eine elektrische Leitungs- und Kontaktanordnung für ein zahnärztliches Gerät gemäß dem ersten Teil von Anspruch 1. Eine derartige Anordnung ist beispielsweise aus der DE-A-3 339 650 bekannt.

Bei zahnärztlichen Geräten, insbesondere zahnärztlichen Handstücken, denen über einen versorgungsschlauch elektrische Energie zugeführt wird, besteht häufig das Problem, die Energie über eine bestimmte Wegstrecke, z.B. vom rückwärtigen Ende des Handstückes, auf ein oder mehrere, im vorderen Bereich des Handstückes befindliche Verbraucher zu übertragen. Bisher verwendete man im Gerät verlegte, flexible oder starre Leitungen, an deren einen Enden zur Kontaktierung der Verbraucher Kontaktelemente und an deren anderen Enden Anschlußelemente durch Schweißen, Löten oder Klemmen befestigt sind.
Eine solche, aus mindestens drei miteinander verbundenen Teilen bestehende Energieübertragungsanordnung ist beispielsweise aus der DE-B-1 250 053 bekannt. Bei dem dort beschriebenen Gegenstand sind die Enden der durch den Versorgungsschlauch geführten flexiblen Leitungen an Kontaktfedern angelötet, an denen wiederum Kontaktstifte in Form von Hohlnieten befestigt sind.

Eine Kontaktanordnung ähnlicher Art ist aus DE-A-3 339 650 bekannt. Auch hier ist eine flexible Zuleitung vorgesehen, die durch einen Handstückteil hindurchgeleitet ist und in einem Kontaktstift endet. Der Kontaktstift greift in eine federnde Buchse ein, die Bestandteil eines Schleifringes ist. Der Schleifring ist der eine Teil einer Kontaktanordnung, mit der es möglich ist, Energie zwischen zwei gegeneinander verdrehbaren Teilen eines zahnärztlichen Handstückes zu übertragen. Das mit dem Schleifring korrespondierende Gegenstück ist eine Kontaktfahne, die mit ihrem einen Ende federnd am Schleifring anliegt und mit ihrem anderen Ende eine Kontaktfläche für den Anschluß einer elektrischen Lampe bildet. Die Kontaktfahne ist einstückig, so daß eine direkte Verbindung vom Schleifring zur Lampe hergestellt wird. Die Kontaktfahne liegt bei dieser Kontaktanordnung federnd an der Kontaktstelle an.

Die bekannten Kontaktanordnungen, bei denen zur Energieübertragung mehrere miteinander verbundene Teile vorgesehen sind, weisen eine Reihe von Nachteilen auf. Einerseits sind sie montageintensiv; andererseits bergen sie die Gefahr in sich, daß die Verbindungen nicht ausreichend sicher sind (kalte Lötstellen od.dgl.) oder daß die Anschluß- und Kontaktelemente falsch montiert werden, wodurch es zu Kurzschlüssen kommen kann. Weiterhin sind die Verbindungsstellen relativ korrosionsanfällig. Diese Nachteile wirken sich besonders stark aus wenn mehrere Kontaktstellen von einem Leitungsabschnitt aus zu versorgen sind.

Der im Anspruch 1 angegebenen Erfindung liegt die Aufgabe zugrunde, demgegenüber eine Verbesserung zu erzielen und eine elektrische Leitungs- und Kontaktanordnung der eingangs genannten Art anzugeben, die unter Vermeidung der vorgenannten Nachteile insbesondere für die Versorgung mehrerer Verbraucher gut geeignet ist.

Diese Aufgabe wird durch die in Anspruch 1 definierte Erfindung gelöst.

Nachfolgend werden mehrere Ausführungsbeispiele der Erfindung anhand der Zeichnung erläutert. Es zeigen:
Figur 1 ein Anwendungsbeispiel der erfindungsgemäßen Kontaktanordnung bei einem zahnärztlichen Zahnsteinentfernungsgerät,
Figuren 2 und 3 zwei Ausführungsformen der erfindungsgemäßen Anordnung in schaubildlicher Darstellung,
Figur 4 die Vorrichtung nach Figur 3 als Rohteil in einer Draufsicht,
Figur 5 eine Variante zu der in Figur 2 gezeigten Ausführung,

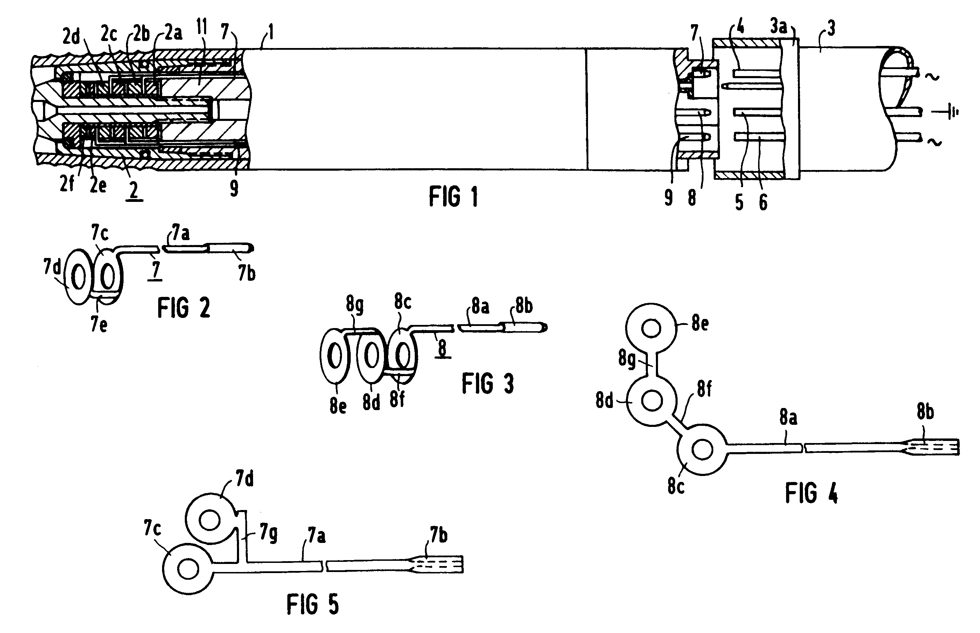

Die Figur 1 zeigt in einer Längsschnittdarstellung ein zahnärztliches Ultraschall-Zahnsteinentfernungshandstück, mit einem in einem Griffkörper 1 angeordneten Antrieb 2, der in bekannter Weise eine nicht dargestellte Instrumentenspitze zu Schwingungen anregt. Der Antrieb 2 enthält vier in Ebenen quer zur Längsachse des Handstückes aneinandergereiht angeordnete Piezoplättchen 2a bis 2d, die das Antriebsschwingerpaket bilden und zwei weitere Piezoplättchen 2e, 2f, die zur Bildung der Rückkopplungssignale dienen. Zur Erregung des Schwingerpaketes 2a bis 2f werden die Piezoplättchen mit HF-Energie beaufschlagt, die von einem extern des Handstückes angeordneten, nicht dargestellten Generator erzeugt und mittels Versorgungsleitung dem Handstück zugeführt wird. Der Anschluß der Versorgungsleitung 3 an das Handstück erfolgt mittels einer Steck-/Schraubkupplung 3a, die mit einem entsprechend ausgebildeten Gegenkupplungsteil am rückwärtigen Handstückende zusammenwirkt.

Zur Übertragung der HF-Energie von der Versorgungsleitung 3 auf das Handstück 1 enthält die Kupplung drei mit den Zuleitungen verbundene Buchsen 4, 5, 6, die mit den rückwärtigen Enden dreier, nachfolgend noch näher erläuterter Energieübertragungselemente 7, 8 und 9 verbindbar sind. Während die Übertragungselemente 7 und 8 die HF-Energie an die Piezoplättchen 2a bis 2d legen, dient das Übertragungselement 9 zur Ableitung der von den Piezoplättchen 2e und 2f kommenden Signale an eine extern des Handstückes angeordnete Steuereinrichtung.

Die Energieübertragungselemente 7 und 8 sind bis auf die Leitungsführung gleich aufgebaut; ihr Aufbau ist in den Figuren 2 und 3 schaubildlich dargestellt. Das Übertragungselement 7 besteht aus einem langgestreckten Leitungsabschnitt 7a, der praktisch die Weglänge zwischen dem rückwärtigen Leitungsanschluß und dem am vorderen Ende des Handstückes angeordneten Schwingerpaket überbrückt, einem Steckstift 7b sowie zwei am anderen Ende angeordnete scheibenförmige Plättchen 7c und 7d, die durch einen Steg 7e miteinander elektrisch verbunden sind. Der Steckstift 7b dient als Anschlußelement für die korrespondierend dazu angeordnete Buchse 4 in der Kupplung 3a der Versorgungsleitung 3. Die beiden plättchenförmigen Elemente 7c und 7d sind Kontaktelemente zur Ableitung der zugeführten HF-Energie an die Piezoplättchen des Schwingerpaketes 2.

Die Kontaktanordnung ist so getroffen, daß das Kontaktplättchen 7d zwischen den Piezoscheiben 2d, 2c und das Kontaktplättchen 7c zwischen den Piezoscheiben 2b, 2a liegen.

Das Energieübertragungselement 8 (Fig. 3) ist als 3er-Elektrode aufgebaut, enthält also drei Kontaktplättchen 8c, 8d, 8e, die durch Stege 8f und 8g miteinander verbunden sind. Für dieses Übertragungselement 8 gilt, daß das Plättchen 8c zwischen der Piezoscheibe 2a und einem Resonator 11 das Plättchen 8d zwischen den Piezoscheiben 2c und 2b und das Plättchen 8e zwischen dem Scheiben 2d und 2e zu liegen kommt.

Die Ableitung der Signale von den Piezoscheiben 2e und 2f erfolgt mittels des Übertragungselements 9, welches nur ein einziges ringförmiges Kontaktelement aufweist.

Die Übertragungselemente 7, 8, 9 sind einstückige Bauteile, die aus einem elektrisch leitenden dünnen Blech durch Stanzen, Schneiden od.dgl.,vorzugsweise durch Funkenerosion, gebildet werden. Die Leitungsabschnitte sind schmale Streifen, die vorzugsweise in sich starr sind und somit eine Trägerfunktion übernehmen, die aber auch quer zur Längsausdehnung oder in Längsrichtung elastisch federnd ausgebildet sein können. Der Rohling zur Bildung des in Figur 3 dargestellten Übertragungselements kann ein Stanzteil sein, wie in Figur 4 dargestellt. An dem langgestreckten, praktisch die Weglänge zwischen Anschluß an der Abgabestelle (Kupplung 3a) und Verbraucher (Piezoplättchen) überbrückenden Leitungsabschnitt 8a schließen sich die drei Kontaktringe 8c, 8d und 8e, verbunden durch die Stege 8f und 8g an. Das fertige Stanzteil wird anschließend durch Biegen bzw. Rollen in die gewünschte Form (Figur 3) gebracht. Zur Bildung der Kontaktstifte am schlauchseitigen Anschluß ist das eine Ende des Übertragungselements entsprechend breiter ausgeführt.

Die Figur 5 zeigt eine Variante eines Rohteils mit zwei Kontaktplättchen, bei der, im Gegensatz zu der in Figur 2 gezeigten Ausführung, das Kontaktplättchen 7d durch eine Abzweigung 7g direkt mit dem Leitungsabschnitt 7a verbunden ist. Durch entsprechendes Biegen kann auch hier eine parallele Anordnung der Kontaktelemente, wie in Figur 2 gezeigt, erreicht werden.

Durch die erfindungsgemäße Ausbildung lassen sich die Übertragungselemente nahezu allen räumlichen Gegebenheiten anpassen. Die Oberfläche der Übertragungselemente kann blank oder mit zusätzlichen Isolierstoffen überzogen (ummantelt) sein.

Besonders vorteilhaft kann es sein, einen Teil der Übertragungselemente, vorzugsweise den langgestreckten Leitungsabschnitt (7a) als den einen Teil eines Bimetallschalters zu verwenden, dessen zweiter Teil auf den Leitungsabschnitt aufgesetzt sein kann. Damit kann die Kontaktanordnung gleichsam auch eine Schaltfunktion übernehmen.

Es ist selbstverständlich, daß die rückwärtigen Anschlußelemente, die in den gezeigten Ausführungsbeispielen als Steckstifte gezeichnet sind, auch als Steckbuchsen oder Flachstecker ausgebildet sein können.

## Patentansprüche

1. Elektrische Leitungs- und Kontaktanordnung für ein zahnärztliches Gerät, bestehend aus einem einstückigen Banteil (7,8), welches einen langgestreckten Leitungsabschnitt (7a, 8a) enthält, der die Übertragung elektrischer Energie von einer Abgabestelle (3a) zu Kontaktstellen eines oder mehrerer Verbraucher (2a bis 2f) übernimmt und der an seinem der Abgabestelle zugewandten Ende mindestens ein Anschlußelement (7b, 8b) und an seinem den Kontaktstellen zugewandten Ende Kontaktelemente (7c, 8c,7d, 8d, 8e) zur Ableitung der Energie an den(die) Verbraucher enthält, **dadurch gekennzeichnet,** daß die Kontaktelemente (7c, 7d, 8c, 8d, 8e) von dem Leitungsabschnitt (7a, 8a) abzweigen, oder hintereinander angeordnet sind und durch Verbindungsstege (7g) aus Leitungsabschnitt (7a) befestigt bzw. durch Verbindungsstege (8f, 8g) miteinander verbunden am Leitungsabschnitt (8a) befestigt sind.

2. Anordnung nach Anspruch 1, **dadurch gekennzeichnet,** daß die Kontaktelemente (7c, 7d, 8c, 8d, 8e) als Kontaktringe ausgebildet sind.

3. Anordnung nach Anspruch 2, **dadurch gekennzeichnet,** daß für eine flächige Kontaktierung mehrerer, hintereinander liegender Verbraucher (2a bis 2f) die Kontaktringe in parallelen Ebenen angeordnet sind.

4. Anordnung nach einem der Ansprüche 1 bis 3, **dadurch gekennzeichnet,** daß das Bauteil (7, 8,) aus dünnen und schmalen Streifen besteht, wobei die Konturen der Anschlußelemente (7b, 8b,) und die Anordnung der Kontaktelemente durch Verformung der Streifen gebildet werden.

5. Anordnung nach Anspruch 4, **dadurch gekennzeichnet,** daß das Bauteil (7, 8,) durch Funkenerosion gebildet ist.

6. Anordnung nach einem der Ansprüche 1 bis 5, **dadurch gekennzeichnet,** daß der Leitungsabschnitt (7a, 8b,) den einen Teil eines Bimetall-Schalters bildet, dessen anderer Teil auf den Leitungsabschnitt aufgesetzt ist.

## Claims

1. Electrical conduit and contact arrangement for a dental device, comprising a one-piece component (7, 8), which contains an extended conduit section (7a, 8a), which undertakes the transmission of electric power from a supply point (3a) to contact points of one or more users (2a to 2f) and which contains at its end facing the supply point at least one connection element (7b, 8b) and at its end facing the contact points contact elements (7c, 8c, 7d, 8d, 8e) for diverting the power to the user(s), characterized in that the contact elements (7c, 7d, 8c, 8d, 8e) branch off from the conduit section (7a, 8a) or are arranged in series and are fastened to the conduit section (7a) by means of connection bars (7g) or, connected to one another by means of connection bars (8f, 8g), are fastened to the conduit section (8a).

2. Arrangement according to claim 1, characterized in that the contact elements (7c, 7d, 8c, 8d, 8e) are constructed as contact rings.

3. Arrangement according to claim 2, characterised in that the contact rings are arranged in parallel planes for a laminar contacting of several users (2a to 2f) lying in series.

4. Arrangement according to one of claims 1 to 3, characterized in that the component (7, 8) consists of thin and narrow strips, with the contours of the connection elements (7b, 8b) and the arrangement of the contact elements being formed by deformation of the strips.

5. Arrangement according to claim 4, characterized in that the component (7, 8) is formed by way of electroerosion.

6. Arrangement according to one of claims 1 to 5, characterized in that the conduit section (7a, 8b) forms the one part of a bimetal switch, the other part of which is attached to the conduit section.

## Revendications

1. Dispositif de lignes et de contacts électriques pour un appareil de dentisterie, constitué par un composant monobloc (7,8), qui comporte une section de conducteur allongée (7a,8a), qui assure la transmission d'une énergie électrique depuis un point de délivrance (3a) en direction de points de contact d'un ou plusieurs appareils d'utilisation (2a à 2f) et qui comporte au niveau de son extrémité tournée vers le point de délivrance, au moins un élément de raccordement (7b,8b) et, au niveau de son extrémité tournée vers les points de contact, des éléments de contact (7c,8c, 8d,8d,8e) pour délivrer l'énergie à l'appareil (aux appareils) d'utilisation, caractérisé par le fait que les éléments de contact (7c,7d,8c,8d,8e) partent en dérivation de la section de conducteur (7a,8a) ou sont disposés les uns derrière les autres et sont fixés sur la section de conducteur (7a) par des barrettes de liaison (7g) ou sont fixés sur la section de conducteur (8a) en étant reliés entre eux par des barrettes de liaison (8f,8d).

2. Dispositif suivant la revendication 1, caractérisé par le fait que les éléments de contact (7c,7d, 8c,8d,8e) sont réalisés sous la forme d'anneaux de contact.

3. Dispositif suivant la revendication 2, caractérisé par le fait que pour l'établissement d'un contact, sur une certaine surface, de plusieurs appareils d'utilisation (2a à 2f) disposés les uns derrière les autres, les anneaux de contact sont disposés dans des plans parallèles.

4. Dispositif suivant l'une des revendications 1 à 3, caractérisé par le fait que le composant (7,8) est constitué par des bandes minces et étroites, les contours des éléments de raccordement (7b,8b) et un agencement des éléments de contact étant obtenus par déformation des bandes.

5. Dispositif suivant la revendication 4, caractérisé par le fait que le composant (7,8) est formé par étincelage.

6. Dispositif suivant l'une des revendications 1 à 5, caractérisé par le fait que la section de conducteur (7a,7b) forme une partie d'un interrupteur bimétallique, dont l'autre partie est en appui sur la section de conducteur.
